# FASCICULE DE BREVET EUROPEEN

(11) **EP 0 720 265 B1**
(45) Date de publication et mention de la délivrance du brevet: **09.12.1998**
(21) Numéro de dépôt: 94500210.3
(22) Date de dépôt: 29.12.1994
(51) Int. Cl.: H02G 3/14, H02G 3/08

(54) **Cadre mixte avec assemblage isolant flottant pour appareils éléctriques**
Gemischter Rahmen mit einer schwimmenden Isolieranordnung für elektrische Geräte
Mixed frame with floating insulating assembly for electrical apparatus

(43) Date de publication de la demande: 03.07.1996
(73) Titulaire: SCHNEIDER ELECTRIC ESPANA, S.A., 08007 Barcelona (ES)
(72) Inventeur: Miquel Marti, Salvador, E-08025 Barcelona (ES); Pla Jensen, Eduardo, E-08028 Barcelona (ES)
(74) Mandataire: Joly, Jean-Jacques

(56) Documents cités:
- EP-A- 0 620 620
- EP-A- 0 620 621
- BE-A- 403 883
- DE-U- 7 533 004

## Description

L'invention concerne un cadre mixte avec assemblage isolé flottant pour appareils électriques, du type de ceux utilisés comme arrêt ou finition des appareils ou dispositifs électriques encastrables, petit matériel électrique, tel qu'interrupteurs, prises, poussoirs, commutateurs, etc., qui, selon des demandes de brevet précédemment déposées de la même demanderesse, comprennent des cadres modulaires de différentes dimensions pour un, deux, trois et quatre éléments.

L'invention développe une technique ou solution combinée pour structurer un cadre mixte ou un cadre composé de deux parties qui s'assemblent entre elles de manière simple et efficace, de manière telle que la partie intérieure sert comme moyen d'union et d'isolation entre la partie extérieure et le châssis métallique servant de support aux mécanismes électriques se logeant dans le boîtier encastrable où se trouvent les connexions.

L'exigence est donnée par les normes et par la réalité inévitable des dérivations électriques pouvant se transmettre du châssis métallique au cadre d'embellissage externe et manipulable par l'usager.

La situation trouve son origine dans l'usage permanent de cadres recouverts de métal ou qui ont été soumis à des bains galvaniques pour les décorer ou leur donner l'apparence de métal, doré, argenté ou autre selon les besoins décoratifs nécessaires aux différentes installations.

La difficulté ou impossibilité de faire la différence entre les parties d'une pièce unitaire quand celle-ci recevra le traitement galvanique, normalement par immersion continue ou multiple dans des bains de ce genre, logiquement pour assouplir et baisser les coûts de fabrication rendent presque impossible le non-recouvrement des parties servant de lien avec le châssis métallique porte-mécanismes.

L'invention propose un ensemble combiné de cadre d'embellissage assurant, d'un côté, l'isolement nécessaire des parties par rapport à la dérivation électrique non souhaitée entre le cadre et le châssis, et, de l'autre, permettant le polydimensionnement du cadre dans les versions nécessaires, sans avoir à prévoir des moules spécifiques d'ensemble pour chaque opération.

### ETAT DE LA TECHNIQUE

L'invention concerne essentiellement l'objet compris dans le brevet EP-A-0620621 concernant "un cadre embellissant modulaire polydimensionnable pour support ou accouplement d'appareils électriques" muni de moyens (consoles) d'ancrage radiaux libres, élastiques et spécialement prévus pour l'emboîtement, sous simple pression, sur des saillies prévues à cet effet dans les châssis porte-mécanismes tels que décrits dans le brevet EP-A-0620620 concernant "un châssis à support multicombinale pour appareils électriques".

Le cadre d'embellissage ou cadre extérieur pour les appareils électriques du genre mentionné antérieurement (EP-A-0620621) est formé par une seule pièce au profil creux, de silhouette ou section convenable, formée de moyens d'ancrage du type mentionné (radiaux, saillants et libres à la manière de consoles) dans chaque coin et centralement, à des distances proportionnelles et équidistantes pour fixation sur un, deux, trois ou quatre châssis porte-mécanismes.

Ces cadres peuvent être recouverts d'une matière métallisée décorative et protectrice dans les conditions décrites antérieurement.

Le fait que le cadre soit constitué par une seule pièce rend inséparables les moyens d'ancrage du corps, et inévitable la communication entre cette pièce et le châssis métallique porte-mécanismes. Les dérivations électriques causées par une connexion déficiente, un câble pelé, un plot libre, lâche, ou un autre mécanisme, sont transférées au cadre, d'où un risque pour l'usager.

Voici la raison pour le développement de l'objet de l'invention effectuant un isolement efficace entre ce cadre et le châssis porte-mécanismes.

Le modèle d'utilité DE-U-75 33 004 décrit une prise de courant encastrée résistant aux chocs, qui comprend un boîtier encastré dans un mur et recevant un support d'éléments électriques, une plaque de protection vissée au mur de manière à être plaquée contre le support d'éléments électriques, et un couvercle fixé contre la plaque de protection par encliquetage.

L'invention veut garder les caractéristiques de normalisation, dessin et profil angulaire -inversé- du cadre et des moyens mêmes d'ancrage ou embridage avec les châssis métalliques porte-mécanismes.

Une autre idée particulière à l'invention est de séparer ou rendre indépendants les moyens d'ancrage susmentionnés du corps du cadre; ainsi, aucune, communication n'existe entre leur embridage et les encaissages mâles de châssis et le châssis lui-même ; aucune transmission n'est possible entre les dérivations de celui-ci et le châssis.

L'idée de l'invention est d'établir l'union du cadre et de ses ancrages à travers un assemblage ou enfilage flottant, rendant cet ancrage indépendant du cadre, en les isolant.

### DESCRIPTION DE L'INVENTION

Les caractéristiques essentielles de l'invention sont définies dans la revendication 1. Des modes de réalisation particuliers sont définis dans les revendications dépendantes 2 à 11. Egalement, l'invention comprend les caractéristiques ci-dessous, dont certaines peuvent être déduites des revendications.

Le cadre d'embellissage externe de profil angulaire inversé est associé avec un contre-cadre fractionné en secteurs, ayant les dimensions et proportions nécessaires, selon le format et la taille du cadre.

Un autre détail est le fait que cette association est liée à un système d'embrayage à travers des moyens synthétiques (diélectriques), en contact avec l'intérieur du cadre.

Voici la raison pour laquelle le contre-cadre consiste en des pièces synthétiques en matériaux plastiques isolants se montant dans le cadre après leur galvanisation et séchage.

Aussi, les pièces du contre-cadre comportent des moyens d'ancrage de disposition analogue à ceux considérés dans les cadres polydimensionnables du brevet EP-A-0620621, tout en respectant, comme il a été dit, les mêmes format et système de soutien que celui-ci revendiquait.

Le cadre objet de l'invention est muni de moyens femelles d'enfilage pour les pièces du contre-cadre. Ces moyens sont de préférence des rainures effectuées dans la paroi intérieure-verticale ou socle du cadre et, en face de celles-ci, sur la paroi opposée intérieure du cadre, des incisions aveugles servant d'encaissages femelles sont prévues.

De préférence, les rainures sont espacées et équidistantes, et les incisions sont continues.

Les rainures sont régulières et les incisions ont un profil ajusté à la silhouette du cadre, avec un plan d'enclavement saillant.

Les rainures et incisions sont localisées à des hauteurs différentes en raison, en général, de la forme descendante de la silhouette du cadre sur le plan extérieur du cadre.

Un autre détail du cadre est que son bord inférieur présente, dans les zones coïncidant avec les incisions continues, et avec un espacement équivalent à celles-ci, un chanfrein en biseau descendant vers l'extérieur pour permettre l'entrée du cadre dans ses montages avec le contre-cadre.

Une autre caractéristique principale de l'invention est que les fragments du contre-cadre sont munis d'enchâssures mâles permettant l'encaissage dans les enchâssures femelles décrites.

Celles-ci sont formées par des languettes parallèles ascendantes par-dessus les bords du profil du contre-cadre, définissant ainsi une fourche en "U" irrégulière, avec des hauteurs différentes et finies en griffes d'encaissage orientées vers l'extérieur, ayant un profil d'onglette pour enclavage, respectivement, dans les rainures et incisions du cadre.

Les languettes intérieures sont distantes et équidistantes en rapport avec l'équidistance des rainures du cadre et les languettes externes sont continues en rapport avec les incisions de celui-ci.

Les languettes intérieures discontinues sont à des hauteurs différentes de celles des languettes continues, toujours en rapport avec les encaissages femelles du cadre respectifs.

La position des languettes discontinues et continues est convenablement excentrique, ce qui assure un espace de soutien plus grand et une plus grande facilité dans la fixation ou montage des parties cadre/contre-cadre.

Un autre détail de l'invention est que la saillie importante des languettes et la condition du matériau synthétique permettent, respectivement, un accouplement flottant isolé entre cadre et contre-cadre et l'isolement diélectrique même du matériau entre le contre-cadre et le châssis métallique porte-mécanismes de l'appareil électrique.

Une autre particularité du contre-cadre, selon l'invention, est l'utilisation de deux uniques fragments comme solution pour montage dans tout autre type de cadre, quelles qu'en soient les dimensions.

Chaque fragment comporte un double jeu d'ancrages servant de soutien au châssis métallique porte-mécanismes. L'un d'eux a une forme en "U" et ses ancrages sont disposés suivant les bissectrices, avec les ancrages au centre, orientés, logiquement, en saillies obliques opposées et ayant des angles et rayons coïncidant avec les angles et rayons des ancrages mâles du châssis métallique.

Par conséquent, une disposition de deux fragments en "U" est apte pour tous les cadres, qu'il s'agisse d'un, deux, trois, quatre éléments (ou plus, s'il s'agit d'éléments normalisés) incorporant un, deux ou trois fragments rectilignes pour les cadres à deux, trois ou quatre éléments, dûment localisés à la distance prévue pour chaque cadre.

Un autre détail préféré de l'invention est que les moyens d'enfilage sur le fragment en "U" du contre-cadre sont localisés dans deux zones adjacentes de chaque arête.

Un autre détail préféré de l'invention est que les moyens d'enfilage, sur le fragment rectiligne, se trouvent localisés dans la zone centrale de celui-ci.

Les caractéristiques de l'invention apparaîtront plus clairement à la lecture de la description suivante, en référence aux dessins annexés, dans lesquels sont représentés de manière schématique et seulement à titre d'exemple les détails préférés de l'invention.

Dans les dessins :

La figure 1 est une vue de dessus du cadre.

La figure 2 est une vue de côté du cadre de la figure 1.

La figure 3 est une vue en coupe suivant la ligne A-A de la figure 1.

La figure 4 est une vue de dessous du cadre (dans cet exemple, pour un seul élément) selon l'invention.

La figure 5 est une vue agrandie du détail "D" de la figure 3.

La figure 6 est une vue agrandie du détail "E" de la figure 3.

La figure 7 est une vue de dessous du fragment en "U" du contre-cadre.

La figure 8 est une vue en coupe suivant la ligne A-A de la figure 9.

La figure 9 est une vue de dessus du fragment en "U" du contre-cadre.

La figure 10 est une vue agrandie du détail "D" de la figure 8.

La figure 11 est une vue de dessus du fragment rectiligne du contre-cadre.

La figure 12 est une vue en coupe suivant la ligne A-A de la figure 11.

La figure 13 est une vue de dessous du fragment rectiligne du contre-cadre.

La figure 14 est une vue agrandie du détail "D" de la figure 12.

La figure 15 est une vue en coupe suivant la ligne B-B de la figure 13.

La figure 16 est une vue de l'assemblage des détails des figures 6 et 15.

Les figures 17, 18, 19 et 20 sont des vues d'un cadre pour deux éléments.

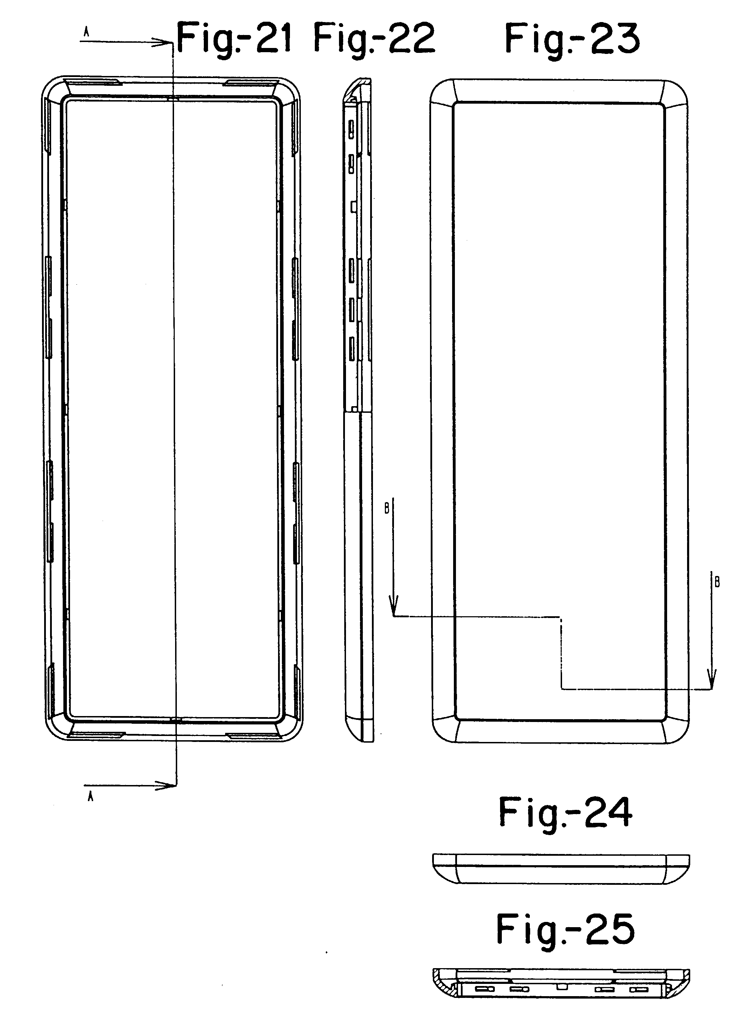

Les figures 21 à 25 sont des vues d'un cadre pour trois éléments.

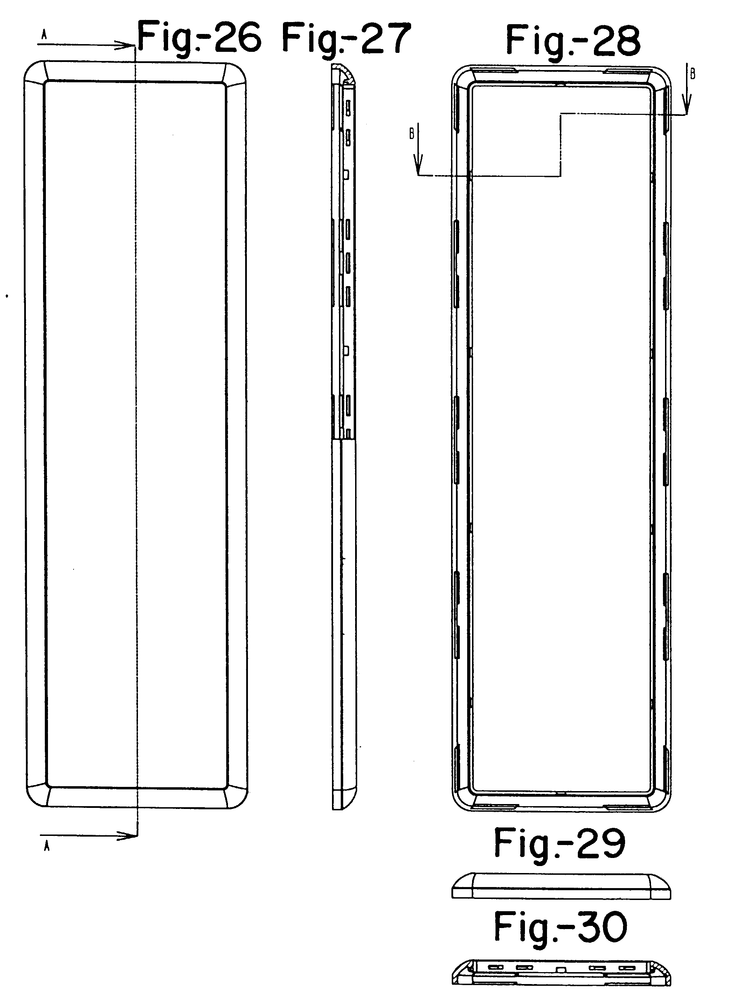

Les figures 26 à 30 sont des vues d'un cadre pour quatre éléments.

### DESCRIPTION DES DESSINS

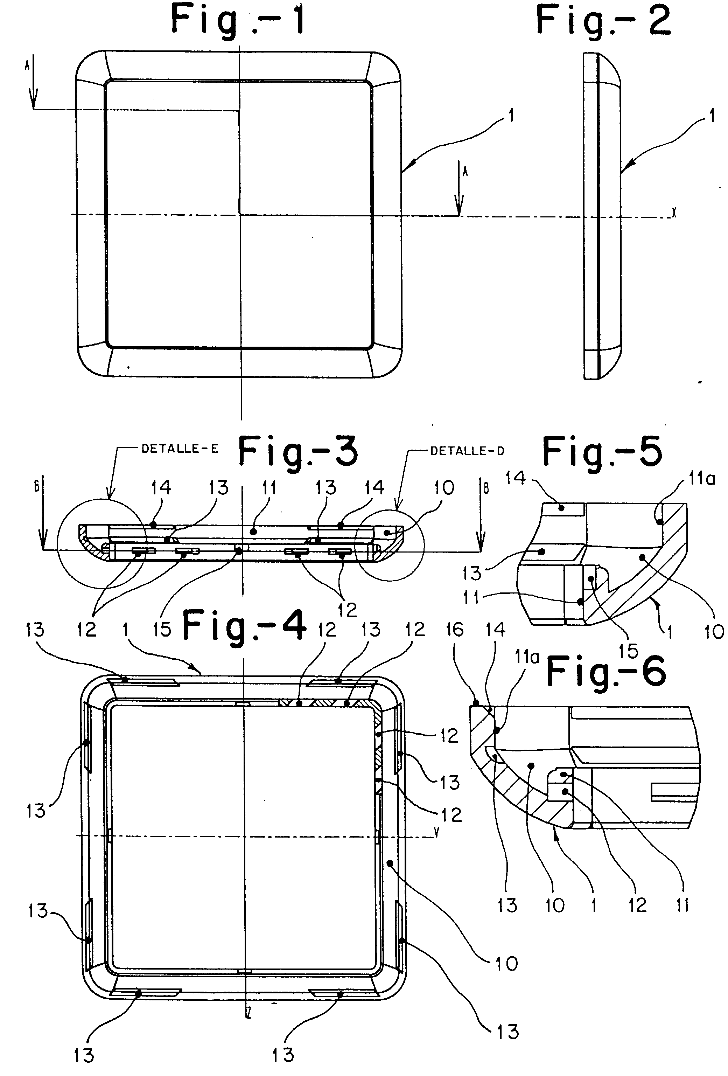

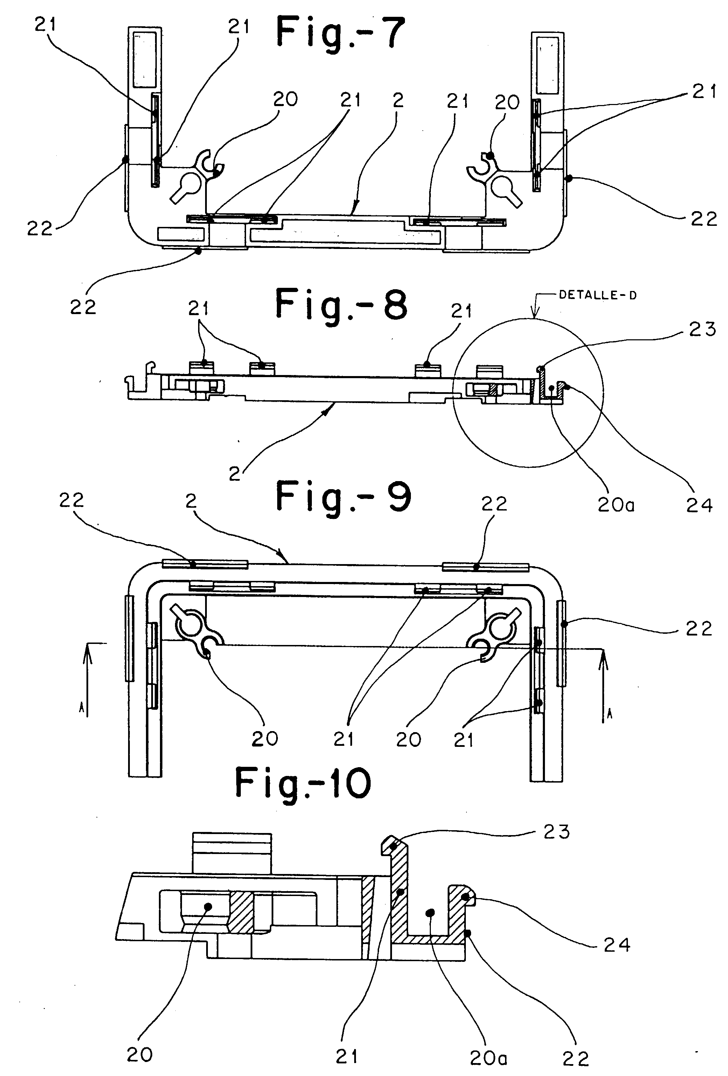

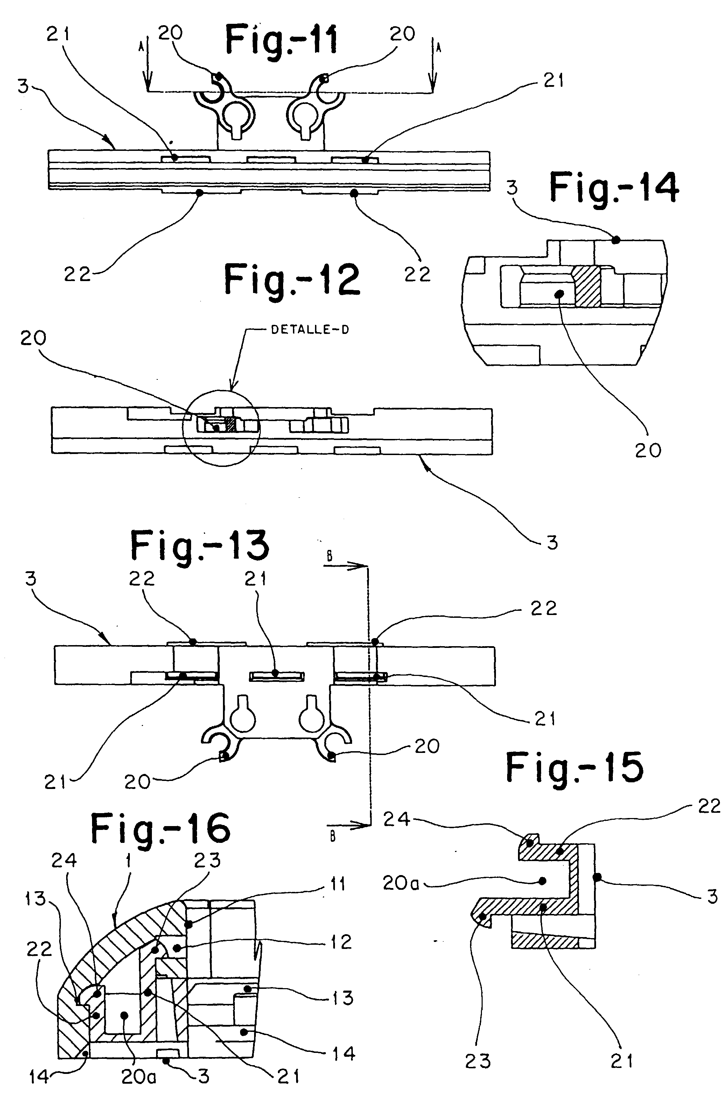

En référence à ces illustrations, le cadre, de manière générale, est désigné par (1) (Figures 1 à 6), le fragment en "U" du contre-cadre est désigné par (2) (Figures 7 à 10) et le fragment rectiligne du contre-cadre est désigné par (3) (Figures 11 à 16).

La section en profil angulaire du cadre (1) est désignée par (10), les repères (11) et (11a) désignant respectivement le bord intérieur et la paroi opposée à ce bord (11).

Le bord (11) comprend différentes rainures (12) discontinues et équidistantes, en regard et de niveau différent, selon l'exemple et exigence du profil (10), des incisons ou creux continus (13), avec celles qui sont convenablement accouplées ou excentriques entre elles, mais centrées par rapport aux chanfreins (14) en biseau descendant pratiqués sur l'arête inférieure ou base (16) du cadre (1) et prévus pour faciliter l'accouplement -entrée- avec les contre-cadres (2-3).

Les fragments des contre-cadres (2-3) dans les zones affectées par les organes mâles d'embridage ont une section en "U" (20a) de hauteur inégale sur les côtés latéraux.

Le fragment du contre-cadre (2) de configuration générale en "U" a des éléments d'ancrage (20) suivant les bissectrices de ses sommets angulaires et le fragment rectiligne (3) a deux éléments d'ancrage (20) de ce genre, disposés centralement pour soutenir deux côtés sur des châssis métalliques porte-mécanismes contigus.

Les éléments d'enfilage mâles discontinus (21) sont tangents à la paroi inférieure du contre-cadre (2 ou 3), et ont une plus grande hauteur, en coïncidence avec les rainures discontinues (12) pour l'enfilage. Les éléments d'enfilage mâles continus (22) sont tangents à la paroi extérieure du contre-cadre (2 ou 3) et à moindre hauteur que (21), en coïncidence avec les incisions continues (13) du cadre.

Les éléments d'enfilage mâles respectifs (21) et (22), avec leurs bases respectives, permettent de maintenir le cadre (1) légèrement distant de la structure générale des contre-cadres (2-3) et des éléments d'ancrage (20), après montage, et se comportent ainsi comme un accouplement flottant parfaitement isolé du châssis métallique porte-mécanismes sur lequel se fixent les éléments d'ancrage (20).

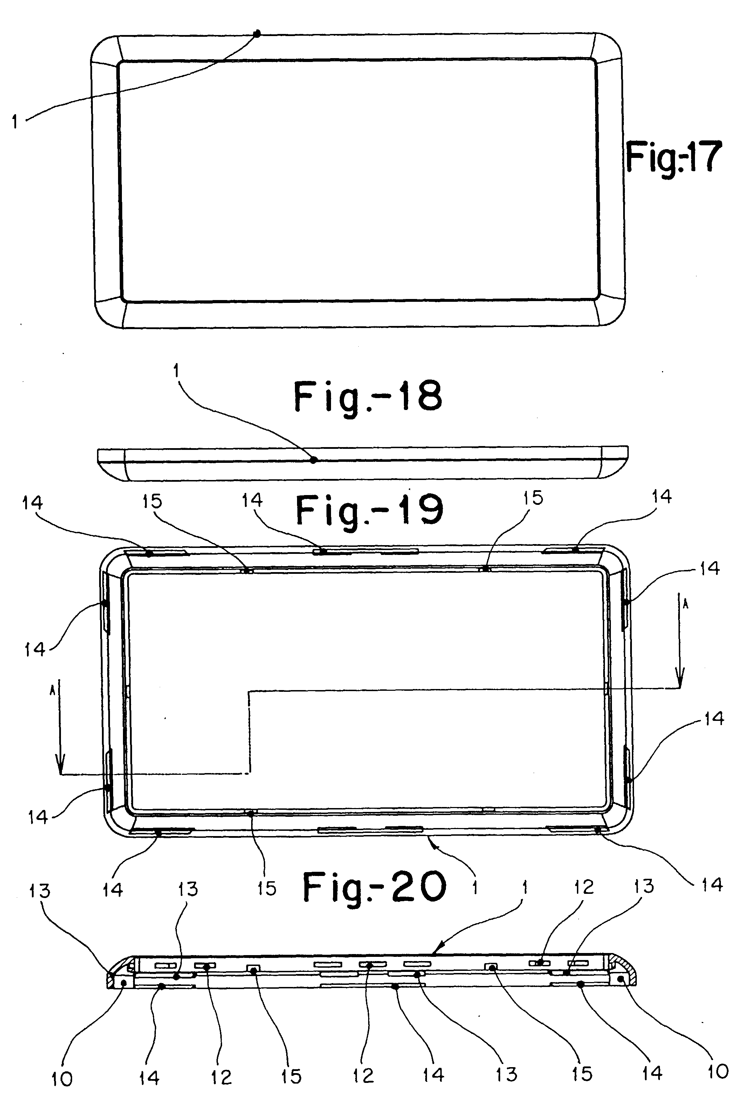

La figure 17 illustre l'assemblage ou enfilage entre les pièces cadre (1) et contre-cadre (selon exemple rectiligne (3)), démontrant ainsi l'efficacité et la sécurité du montage, les chanfreins servant à faciliter l'entrée du cadre (1) dans son accouplement et servant également à faciliter le démontage du contre-cadre, le cas échéant, avec un tournevis ou pointe plate analogue.

## Revendications

1. Cadre mixte pour au moins un appareil électrique supporté par un châssis métallique, le cadre mixte comprenant un cadre (1) galvanisé ou métallisé, un contre-cadre (2-3) et des moyens d'assemblage (12, 13, 21, 22) pour assembler entre eux les cadre et contre-cadre, caractérisé en ce que le contre-cadre est en un matériau diélectrique isolant et comprend des moyens d'ancrage (20) lui permettant d'être soutenu par le châssis métallique, et en ce que les moyens d'assemblage (12, 13, 21, 22) sont disposés de manière telle à assurer un accouplement flottant isolé entre le cadre (1), le contre-cadre (2-3) et le châssis métallique.

2. Cadre mixte conforme à la revendication 1, caractérisé en ce que les moyens d'assemblage comprennent de préférence des moyens d'assemblage femelles (12-13) disposés dans le cadre et des moyens d'assemblage mâles (21-22) disposés sur le contre-cadre.

3. Cadre mixte conforme à la revendication 2, caractérisé en ce que lesdits moyens femelles (12-13) d'assemblage comprennent des premiers moyens d'assemblage femelles (12) disposés de manière discontinue sur un bord intérieur (11) du cadre (1) et des seconds moyens d'assemblage femelles (13) disposés de manière continue dans une paroi intérieure (11a) du cadre opposée audit bord.

4. Cadre mixte conforme à la revendication 3, caractérisé en ce que les premiers et seconds moyens d'assemblage femelles sont respectivement des rainures (12) et des incisions ou creux (13) se faisant face mais légèrement excentriques entre elles, et situées à des hauteurs respectives différentes.

5. Cadre mixte conforme à la revendication 3 ou 4, caractérisé en ce qu'un bord inférieur ou base (16) du cadre (1) est muni de chanfreins en biseau descendant (14) placés convenablement en hauteur par rapport aux moyens d'assemblage femelles (12, 13).

6. Cadre mixte conforme à l'une quelconque des revendications 3 à 5, caractérisé en ce que lesdits moyens mâles d'assemblage comprennent des premiers (21) et seconds (22) moyens mâles d'assemblage disposés de manière tangentielle respectivement à des parois intérieure et extérieure du contre-cadre (2-3), et à des hauteurs respectives différentes, dans le but de coïncider avec les premiers (12) et seconds (13) moyens femelles d'assemblage du cadre (1).

7. Cadre mixte conforme à l'une quelconque des revendications 2 à 6, caractérisé en ce que les moyens d'assemblage mâles (21-22) sont des éléments saillant au-dessus de bases respectives et se terminant en griffes en forme d'onglettes.

8. Cadre mixte conforme à l'une quelconque des revendications 1 à 7, caractérisé en ce que le contre-cadre est fragmenté en seulement deux pièces (2-3) combinables pour montage de cadres (1) sur un, deux, trois, quatre (ou plus) éléments.

9. Cadre mixte conforme à la revendication 8, caractérisé en ce que lesdites deux pièces (2-3) sont respectivement un fragment en forme de "U" (2) pour maintenir deux sommets angulaires (coins) contigus d'un cadre (1) de n'importe quelle dimension, et un fragment rectiligne (3) pour compléter le maintien central du cadre.

10. Cadre mixte conforme à la revendication 9, caractérisé en ce que les deux fragments sont munis de moyens d'ancrage radiaux (20) respectivement disposés selon la bissectrice de chaque sommet angulaire du fragment en forme de "U" (2), et en saillies obliques opposées, avec des angles identiques, au centre des fragments rectilignes (3), afin de maintenir le contre-cadre (2-3) sur le châssis métallique.

11. Cadre mixte conforme à la revendication 9 ou 10 lorsqu'elle dépend de la revendication 2, caractérisé en ce que les moyens d'assemblage mâles (21-22) sont disposés sur les côtés adjacents de chaque sommet angulaire du fragment en "U" (2) et au centre du fragment rectiligne (3) du contre-cadre.

## Patentansprüche

1. Gemischter Rahmen für wenigstens ein durch ein metallisches Gestell getragenes elekrisches Gerät. wobei der gemischte Rahmen einen galvanisierten oder metallisierten Rahmen (1), einen Gegenrahmen (2-3) und Montagemittel (12, 13, 21, 22) zur gegenseitigen Montage des Rahmens und des Gegenrahmens umfaßt, dadurch gekennzeichnet, daß der Gegenrahmen aus einem isolierenden dielektrischen Material besteht und Verankerungmittel (20) umfaßt durch die dieser durch das metallische Gestell getragen wird. und daß die Montagemittel (12, 13, 21, 22) derart angeordnet sind, daß sie eine isolierte schwebende Kupplung zwischen Rahmen (1), Gegenrahmen (2-3) und metallischem Gestell gewährleisten.

2. Gemischter Rahmen gemäß Anspruch 1, dadurch gekennzeichnet, daß die Montagemittel im Rahmen angeordnete, hohle Montagemittel (12-13) und auf dem Gegenrahmen angeordnete, vorspringende Montagemittel (21-22) vorzugsweise umfassen.

3. Gemischter Rahmen gemäß Anspruch 2, dadurch gekennzeichnet, daß die besagten hohlen Montagemittel (12-13) erste, diskontinuierlich auf einem inneren Rand (11) des Rahmens (1) angeordnete hohle Montagemittel (12) und zweite, kontinuierlich in einer inneren, dem besagten Rand gegenüberliegenden Wand (lla) des Rahmens angeordnete hohle Montagemittel (13) umfassen.

4. Gemischter Rahmen gemäß Anspruch 3, dadurch gekennzeichnet, daß die besagten ersten und zweiten hohlen Montagemittel gegenüberliegende jedoch leicht exzentrische und auf verschiedenen entsprechenden Höhen liegende Nuten (12) bzw. Einschnitte oder Vertiefungen (13) sind.

5. Gemischter Rahmen gemäß Anspruch 3 oder 4, dadurch gekennzeichnet, daß ein unterer Rand oder Grundlage (16) des Rahmens (1) mit abwärts abgeschrägten Fasen versehen ist deren Höhenlage den hohlen Montagemitteln (12, 13) angepasst ist.

6. Gemischter Rahmen gemäß irgendwelchem der Ansprüche 3 bis 5, dadurch gekennzeichnet, daß die besagten vorspringenden Montagemittel erste (21) und zweite (22) vorspringende Montagemittel umfassen, die tangential an einer inneren bzw. äußeren Wand des Gegenrahmens (2-3) und auf verschiedenen Höhen angeordnet sind, damit sie mit den ersten (12) und den zweiten (3) hohlen Montagemitteln des Rahmens (1) übereinstimmen.

7. Gemischter Rahmen gemäß irgendwelchem der Ansprüche 2 bis 6, dadurch gekennzeichnet, daß die vorspringenden Montagemittel (21-22) über entsprechenden Grundlagen vorspringenden und mit reiterförmigen Klauen beendeten Glieder sind.

8. Gemischter Rahmen gemäß irgendwelchem der Ansprüche 1 bis 7, dadurch gekennzeichnet, daß der Gegenrahmen in nur zwei kombinierbare Teile (2-3) geteilt ist zur Montage von Rahmen (1) auf ein Glied oder. zwei, drei. vier (oder mehr) Glieder.

9. Gemischter Rahmen gemäß Anspruch 8, dadurch gekennzeichnet, daß die beiden besagten Teile (2-3) ein, zwei benachbarte Winkelspitzen (Winkel) eines Rahmens (1) von beliebiger Maßen festhaltender "U"-förmiger Teil (2) und ein, das zentrale Festhalten des Rahmens vervollständigender geradliniger Teil (3) sind.

10. Gemischter Rahmen gemäß Anspruch 9, dadurch gekennzeichnet, daß die beiden Teile mit radialen Verankerungmitteln (20) versehen sind, die entlang der Halbierende jeder Winkelspitze des "U"-förmigen Teils (2) bzw. entgegengesetzt schräg vorspringend, mit gleichen Winkeln, in der Mitte der geradlinigen Teile (3) angeordnet sind, und anhand denen der Gegenrahmen (2-3) auf dem metallischen Gestell festgehalten wird.

11. Gemischter Rahmen gemäß Anspruch 9 oder 10 wenn er von Anspruch 2 abhängig ist, dadurch gekennzeichnet, daß die vorspringenden Montagemittel (21-22) auf der benachbarten Seiten jeder Winkelspitze des "U"-förmigen Teils (2) und in der Mitte des geradlinigen Teils (3) des Gegenrahmens angeordnet sind.

## Claims

1. A composite frame for at least one electrical appliance. supported by a metal framework, the composite frame comprising a galvanized or metal-plated frame (1), a sub-frame (2, 3), and assembly means (12, 13, 21, 22) for assembling together the frame and the sub-frame, the composite frame being characterized in that the sub-frame is made of an insulating dielectric material and comprises anchoring means (20) enabling it to be supported by the metal framework, and in that the assembly means (12, 13, 21, 22) are disposed so as to ensure an insulated floating coupling between the frame (1), the sub-frame (2, 3), and the metal framework.

2. A composite frame according to claim 1, characterized in that the assembly means preferably comprise female assembly means (12, 13) disposed inside the frame, and male assembly means (21. 22) disposed on the sub-frame.

3. A composite frame according to claim 2, characterized in that said female assembly means (12, 13) comprise first female assembly means (12) disposed in discontinuous manner on an inside edge (11) of the frame (1), and second female assembly means (13) disposed in continuous manner within an inside wall (11a) of the frame remote from said edge.

4. A composite frame according to claim 3, characterized in that the first and second female assembly means are respectively grooves (12) and cuts or hollows (13) facing one another but slightly off-center relative to one another, and situated at different respective heights.

5. A composite frame according to claim 3 or 4, characterized in that a bottom edge or base (16) of the frame (1) is provided with downwardly bevelled chamfers (14) placed at an appropriate height relative to the female assembly means (12, 13).

6. A composite frame according to any one of claims 3 to 5, characterized in that said male assembly means comprise first (21) and second (22) male assembly means respectively disposed in tangential manner on the inside and outside walls of the sub-frame (2, 3), and at different respective heights, for the purpose of interfitting in the first (12) and second (13) female assembly means of the frame (1).

7. A composite frame according to any one of claims 2 to 6. characterized in that the male assembly means (21, 22) are elements projecting above respective bases and terminating in miter-shaped rims.

8. A composite frame according to any one of claims 1 to 7, characterized in that the sub-frame is fragmented into two parts only (2, 3) which can be combined for mounting frames (1) on one, two, three, four, or more elements.

9. A composite frame according to claim 8, characterized in that said two parts (2, 3) are respectively a U-shaped fragment (2) for holding together two adjacent angular vertices (corners) of a frame (1) of any size, and a rectilinear fragment (3) to complete central holding of the frame.

10. A composite frame according to claim 9, characterized in that the two fragments are provided with radial anchoring means (20) disposed along respective bisectors of each angular vertex of the U-shaped fragment (2), and projecting obliquely in opposite directions, with identical angles, at the center of the rectilinear fragments (3), in order to hold the sub-frame (2, 3) on the metal framework.

11. A composite frame according to claim 9 or 10, as dependent on claim 2, characterized in that the male assembly means (21, 22) are disposed on adjacent sides of each angular vertex of the U-shaped fragment (2), and at the center of the rectilinear fragment (3) of the sub-frame.
